# EUROPEAN PATENT APPLICATION

(11) **EP 1 198 980 A1**
(43) Date of publication of application: **24.04.2002**
(21) Application number: 01124114.8
(22) Date of filing: 10.10.2001
(51) Int. Cl.: A01D 34/68

(54) **Motor-driven lawn mower**

(30) Priority: 20.10.2000 IT MI000597 U
(71) Applicant: Ibea S.p.A., 22070 Luisago, (CO9 (IT)
(72) Inventor: Faverio, Danilo, 22070 Casnate con Bernate (CO) (IT); Zanirato, Renzo, 22073 Fino Mornasco (CO) (IT)
(74) Representative: Savi, Alberto

(57) **Abstract**

A motor-driven lawn mower is described, of the type comprising
- a handlebar (2) with a horizontal handgrip (2a);
- a normally actuated motor brake or blade brake;
- a control lever (3) supported by said handlebar (2) to release the motor brake or blade brake; said lever (3) being capable of rotating around an axis parallel to the handgrip (2a) so as to approach the handgrip (2a) in contrast with said return means;
- means (4) for regulating the lawn mower advancement, supported by said handlebar (2), that can be actuated in contrast with return means
wherein
- the means (4) for regulating the lawn mower forward movement comprise a knob (4) which is an integral part of the handgrip (2a) of the handlebar (2); and
the handle (3) is shaped so as to not overlap the knob (4).

## Description

Subject of the present finding is a motor-driven lawn mower.

Motor-driven lawn mowers are provided with means for regulating the forward speed and means for enabling the motor start up or the blade rotation.

To this purpose, suitable control levers in contrast with return means are provided on the handlebars of motor-driven lawn mowers, so that if for any reason the operator leaves the grip on the levers, the lawn mower stops and the blade locks.

US patent no. US-A-5,261,214, to which reference shall be made for a general knowledge of the prior state of the art of this model, presents a motor-driven lawn mower provided with an upturned-U handlebar whose lower ends are connected to the lawn mower chassis, and whose horizontal top serves as handgrip for both user's hands.

Holding the handgrip, the user can actuate a first lever, in contrast with elastic return means, to release the blade brake, and actuate a second lever, in contrast with elastic return means, to regulate the lawn mower forward movement.

Such levers have the shape of handles or loops, parallel to the handlebar's handgrip, mounted along the entire handgrip length and capable of rotating around an axis which is substantially parallel to the handgrip axis, to approach the handgrip.

However, the actuation of handles on lawn mower of this type is not very easy.

Therefore, purpose of the present finding is that of proposing a lawn mower which should allow an easier actuation of the forward movement and blade brake controls.

Such purpose is obtained by a lawn mower conforming with the features of claim 1.

The lawn mower subject of the invention shall now be described hereinafter by way of an example with reference to the attached drawings. In such drawings:

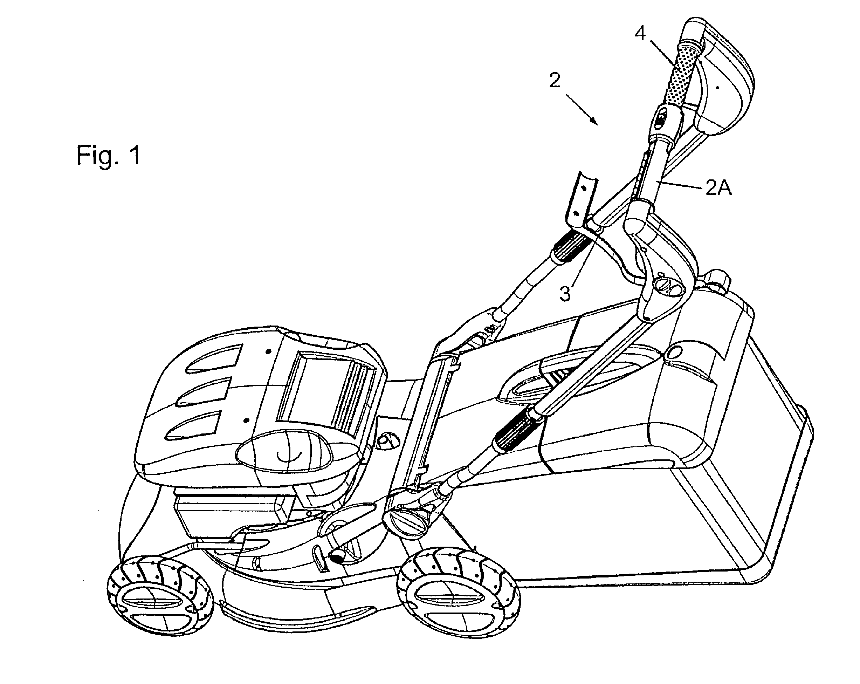

figure 1 sows a perspective view of a lawn mower conforming to claim 1;

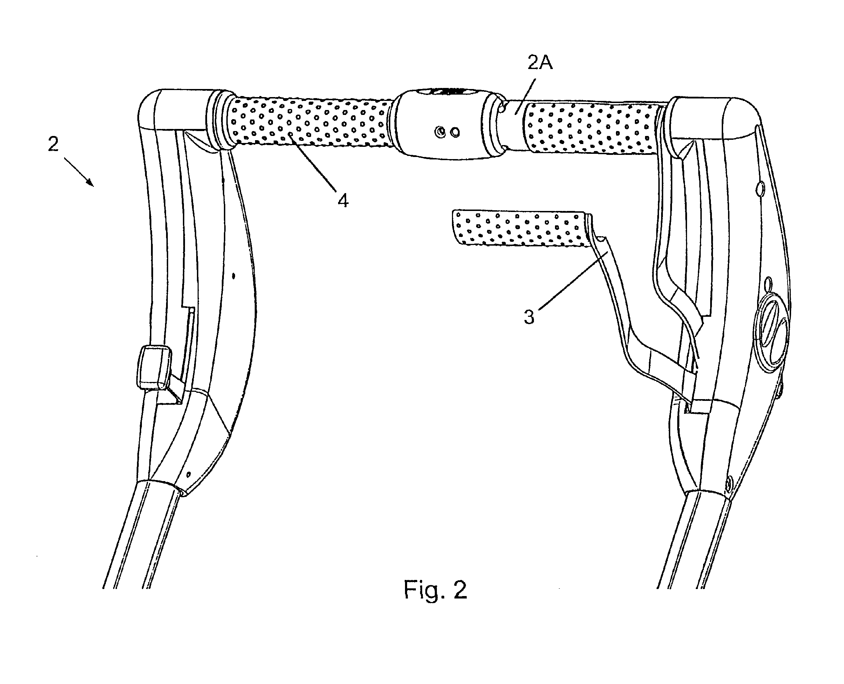

figure 2 shows the perspective view of the handgrip of a lawn mower according to the invention.

With reference to the above figures, a motor-driven lawn mower is shown of the type comprising a handlebar 2, for example shaped as an upturned U, with a horizontal handgrip 2a for both hands.

Means 3 for releasing the motor brake, or the blade brake, and means 4 for regulating the lawn mower forward movement, are provided on portion 2a of handlebar 2.

Means 3 consist of a control lever supported by handlebar 2, capable of rotating around an axis parallel to handgrip 2a, so as to approach the same handgrip, in contrast with said return means.

Means 4 for regulating the lawn mower forward movement are also supported by handlebar 2 and they can be actuated in contrast with said return means.

A feature of the described lawn mower consists in that the means 4 for regulating the lawn mower forward movement consist of a rotating knob which forms an integral part of the handgrip of handlebar 2.

The rotating knob 4 regulates the forward movement speed since it is connected to known means such as, for example, a horizontally oscillating pulley capable of stretching a driving belt so that when it is at the maximum stretch, there is no sliding and the rotation of the driving pulley is integrally transmitted to the driven pulley and thus, to the wheels. On the contrary, when the belt stretch is loosened by rotating knob 4, it slides and the machine advances at a lower speed.

Another feature of the described lawn mower consists in that handle 3 for motor brake or blade brake release, is shaped so as to not overlap the rotating knob 4.

In rest position, handle 3 is preferably at a lower level than handgrip 2a; in fact, it has been noted that such position is particularly ergonomic.

Preferably, the handle portion intended to be gripped by the hands is shaped as a cylindrical surface portion.

From the description it is clear that the lawn mower according to the invention is much more practical and handy to use than those produced according to the former technique, since it allows carrying out all operations without taking the hands off the handgrip.

In fact, the lawn mower forward movement is regulated by simply rotating knob 4 mounted on the handlebar of the machine, and also the brake release lever 3 can be actuated without taking the hands off the handlebar.

As said above, the result is a lawn mower that, thanks to the special configuration of its parts, exhibits a higher utility than the former state-of-the art mowers.

Within the scope of the same solution idea it is possible to provide for different embodiments, all falling within the scope of the present finding.

For example, the knob controlling the lawn mower forward movement could be either on the right or on the left side of the handlebar, and the brake release lever 3 could be indifferently arranged on the left or on the right side as well, so as to not overlap knob 4.

A skilled technician shall understand that the proposed version is much more ergonomic than the former state-of-the-art solutions.

## Claims

1. Motor-driven lawn mower of the type comprising
- a handlebar (2) with a horizontal handgrip (2a);
- a normally actuated motor brake or blade brake;
- a control lever (3) supported by said handlebar (2) to release the motor brake or blade brake; said lever (3) being capable of rotating around an axis parallel to the handgrip (2a) so as to approach the handgrip (2a) in contrast with said return means;
- means (4) for regulating the lawn mower advancement, supported by said handlebar (2), that can be actuated in contrast with return means
**characterised in that**
- the means (4) for regulating the lawn mower forward movement comprise a knob (4) which is an integral part of the handgrip (2a) of the handlebar (2); and
- the handle (3) is shaped so as to not overlap the knob (4).

2. Lawn mower according to claim 1, wherein the handle (3), in rest position, is at a lower level than the handgrip (2a).

3. Lawn mower according to claim 1 or 2, wherein the portion of handle (3) intended to be gripped by the hands is shaped as a cylindrical surface portion.
